(19) **Europäisches Patentamt European Patent Office Office européen des brevets**

(11) **EP 4 459 570 B1**

(12) **EUROPEAN PATENT SPECIFICATION**

(45) Date of publication and mention
of the grant of the patent:
**01.04.2026 Bulletin 2026/14**

(21) Application number: **23178339.0**

(22) Date of filing: **09.06.2023**

(51) International Patent Classification (IPC):
*G06V 20/56* *(2022.01)*

(52) Cooperative Patent Classification (CPC):
**G06V 20/56**

(54) **ASSOCIATING MEASUREMENT POINTS TO SPLINE POINTS IN DETERMINATIONS OF A FREE SPACE BOUNDARY IN A VEHICLE ASSISTANCE SYSTEM**

ZUORDNUNG VON MESSPUNKTEN ZU SPLINE-PUNKTEN BEI BESTIMMUNGEN EINER FREIRAUMGRENZE IN EINEM FAHRZEUGASSISTENZSYSTEM

ASSOCIATION DE POINTS DE MESURE À DES POINTS CANNELÉS DANS DES DÉTERMINATIONS D'UNE LIMITE D'ESPACE LIBRE DANS UN SYSTÈME D'ASSISTANCE DE VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.05.2023 US 202363500092 P**

(43) Date of publication of application:
**06.11.2024 Bulletin 2024/45**

(73) Proprietor: **Aptiv Technologies AG**
**8200 Schaffhausen (CH)**

(72) Inventors:
• **SZLACHETKA, Marek Jacek**
**32-440 Sulkowice (PL)**
• **BORKOWSKI, Dariusz**
**30-689 Kraków (PL)**

(74) Representative: **Manitz Finsterwald**
**Patent- und Rechtsanwaltspartnerschaft mbB**
**Martin-Greif-Straße 1**
**80336 München (DE)**

(56) References cited:
• **SCHREIER MATTHIAS ET AL: "From grid maps to Parametric Free Space maps - A highly compact, generic environment representation for", 2013 IEEE INTELLIGENT VEHICLES SYMPOSIUM (IV), IEEE, 23 June 2013 (2013-06-23), pages 938 - 944, XP032501894, ISSN: 1931-0587, [retrieved on 20131010], DOI: 10.1109/IVS.2013.6629587**
• **YANG H ET AL: "Control point adjustment for B-spline curve approximation", COMPUTER-AIDED DESIGN, ELSEVIER PUBLISHERS BV., BARKING, GB, vol. 36, no. 7, 1 June 2004 (2004-06-01), pages 639 - 652, XP004502046, ISSN: 0010-4485, DOI: 10.1016/S0010-4485(03)00140-4**
• **POTTMANN H ET AL: "Industrial geometry: recent advances and applications in CAD", COMPUTER-AIDED DESIGN, ELSEVIER PUBLISHERS BV., BARKING, GB, vol. 37, no. 7, 1 June 2005 (2005-06-01), pages 751 - 766, XP027649902, ISSN: 0010-4485, [retrieved on 20050601]**

## Description

## TECHNICAL FIELD

The present disclosure relates to a computer-implemented method, an apparatus, and a computer program for associating measurement points to spline points in determinations of a free space boundary of a physical environment surrounding a vehicle in a vehicle assistance system. In addition, the present disclosure relates to a vehicle comprising the aforementioned apparatus.

## BACKGROUND

Nowadays, vehicles (e.g., cars, robots, forklift trucks, ships, etc.) are oftentimes operated by vehicle assistance systems (e.g., by Advanced Driving Assistance Systems (ADAS)) to provide some degree of driving assistance to their driver. However, a vehicle assistance system may also control a vehicle semi-autonomously or fully autonomously. Such control requires that the vehicle assistance system of a vehicle has sufficient knowledge of its surroundings to be aware of impassible regions (e.g., walls, obstacles, and other vehicles), to be able to avoid collisions and allow the vehicle to navigate safely through its surrounding environment. To reliably distinguish between impassible regions and free space, a model must be provided that differentiates the free space from the impassible regions surrounding a vehicle. As a result, modeling and estimating the current local environment by processing sensor measurement data is important for a vehicle assistance system.

However, there is a need for a method in a vehicle assistance system for determining a free space boundary of a physical environment, which reduces the computational resources required for processing a parametric curve representing the free space boundary, while at least preserving the shape and approximation quality with respect to the real-world free space boundary. In addition, there is a need for a more efficient method in a vehicle assistance system to associate measurement points (e.g., free space boundaries determined from sensor data) to spline points that make up the parametric-curve representation of the free space boundary.

SCHREIER MATTHIAS ET AL: "From grid maps to Parametric Free Space maps - A highly compact, generic environment representation for", 2013 IEEE INTELLIGENT VEHICLES SYMPOSIUM (IV), IEEE, 23 June 2013, pages 938-944, ISSN: 1931-0587, DOI: 10.1109/IVS.2013.6629587 discloses a generic map representation that describes a closed contour of arbitrarily shaped outer free space boundaries around a vehicle. YANG H ET AL: "Control point adjustment for B-spline curve approximation", COMPUTER-AIDED DESIGN, ELSEVIER PUBLISHERS BV, BARKING, GB, vol. 36, no. 7, 1 June 2004, pages 639-652, ISSN: 0010-4485, DOI: 10.1016/S0010-4485(03)00140-4 discloses a method for fitting a B-spline curve to approximate a target curve. POTTMANN H ET AL: "Industrial geometry: recent advances and applications in CAD", COMPUTER-AIDED DESIGN, ELSEVIER PUBLISHERS BV., BARKING, GB, vol. 37, no. 7, 1 June 2005, pages 751-766 discloses a method for approximating industrial geometries using B-spline curves.

## SUMMARY

This document describes techniques and systems for associating measurement points to spline points in determining a free space boundary for a vehicle assistance system. In one aspect, a method includes obtaining a set of measurement points that define a subset of a free space boundary. A parametric curve that approximates spatial information representing the free space boundary is also obtained. The parametric curve includes a set of spline points. The method then includes determining, for each respective spline point of the set of spline points, a respective measurement point of the set of measurement points that corresponds to the respective spline point. The method further includes generating a perpendicular line for each spline point of the set of spline points, the perpendicular line passing through the respective spline point, wherein the perpendicular line is used to determine the respective measurement point of the set of measurement points that corresponds to the respective spline point. The method further includes determining an operating instruction for the host vehicle based on the parametric curve affecting a function of a vehicle assistance system of the host vehicle.

In this way, a more efficient technique is disclosed for a vehicle assistance system to associate measurement points to spline points that make up a parametric-curve representation of the free space boundary.

This document also describes systems, other configurations, and computer-executable instructions to perform the above-summarized method.

This Summary introduces simplified concepts related to associating measurement points to spline points in determining a free space boundary described in the Detailed Description and Drawings. This Summary is not intended to identify essential features of the claimed subject matter, nor is it intended to determine the scope of the claimed subject matter.

## BRIEF DESCRIPTION OF THE DRAWINGS

The details of one or more aspects of associating measurement points to spline points in determinations of a free space boundary of a physical environment surrounding a vehicle in a vehicle assistance system are described in this document with reference to the following figures. The same numbers are often used throughout the drawings to reference similar features and components:

FIG. 1 illustrates an exemplified visualization of parametric curves;

FIG. 2 illustrates exemplified longitudinal and lateral one-dimensional (1D) components of a parametric curve in the S-Domain;

FIG. 3 illustrates an exemplified approximation of a free space boundary based on 25 control points;

FIG. 4 illustrates an exemplified approximation of a free space boundary based on 50 control points according to known methods;

FIG. 5 illustrates an exemplified configuration of a vehicle that may implement the techniques described herein for associating measurement points to spline points in determinations of a free space boundary in a vehicle assistance system;

FIG. 6 illustrates an exemplified overview of techniques associated with determining free space boundaries according to aspects of the present invention;

FIG. 7 illustrates an exemplified environment surrounding a vehicle according to aspects of the present invention;

FIG. 8 illustrates an exemplified method to obtain extracted measurement points along a free space boundary;

FIG. 9 illustrates exemplified techniques to associate extracted measurement points to corresponding spline points; and

FIG. 10 illustrates an exemplified method for associating measurement points to spline points in determining a free space boundary in a vehicle assistance system.

## DETAILED DESCRIPTION

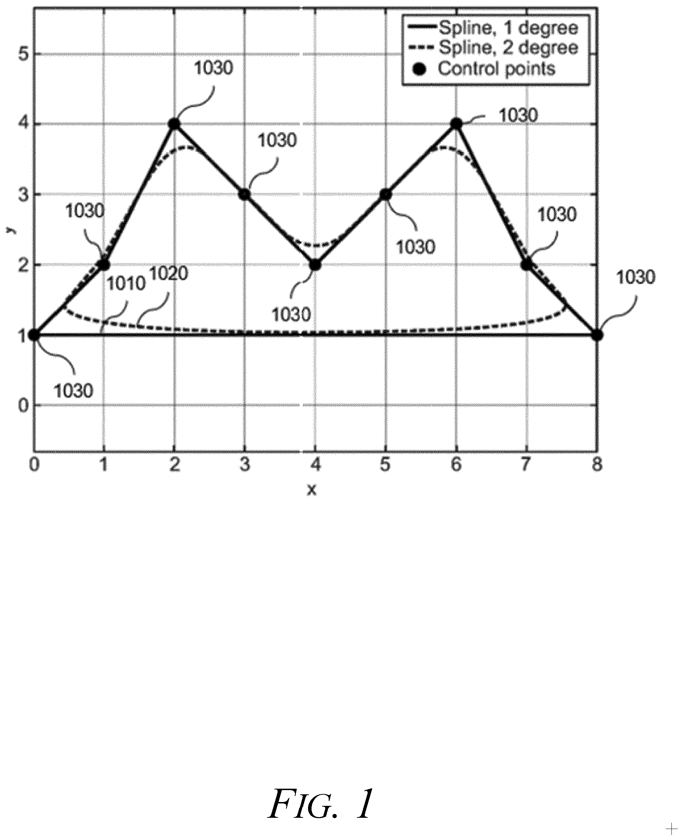

Figure 1 illustrates an exemplified visualization of parametric curves. In particular, Figure 1 illustrates an exemplified visualization of a two-dimensional (2D) parametric curve (i.e., a B-spline curve). Parametric curves are generally piecewise polynomials and are thus of a specific degree. For example, Figure 1 depicts a first parametric curve 1010 of degree one (illustrated by the solid line) and a second parametric curve 1020 of degree two (illustrated by the dashed line). Both parametric curves 1010, 1020 are fitted based on a plurality of control points 1030, each control point 1030 having a position in cartesian coordinates. In this example, nine control points 1030 are used. As can be seen, the first parametric curve 1010 of degree one connects the control points 1030 using straight lines between successive control points 1030. By contrast, the second parametric curve 1020 of degree two is generated using the control points 1030 to generate curved lines and thus approximates the shape of the first parametric curve 1010 in terms of a curved line. For a B-spline curve with a degree greater than one, the control points 1030 act as weights of basis functions (e.g., magnets in a 2D plane).

A commonly used type of model, as for example described by S. Steyer, G. Tanzmeister and D. Wollherr, "Grid-Based Environment Estimation Using Evidential Mapping and Particle Tracking" in IEEE Transactions on Intelligent Vehicles, vol. 3, no. 3, pp. 384-396, Sept. 2018, is a grid-based representation of the environment derived from processing data provided by sensors, for example ranging or odometry sensors, of the vehicle. However, due to the large number of grid cells required for representing the local environment, calculations performed on such models require lots of computational resources, which are typically limited in a vehicle assistance system embedded in a vehicle. In addition, storing grid-based models requires a large amount of memory. Also, if models or parts of models are shared between vehicles, a large amount of data has to be communicated, e.g., by means of a Vehicle-to-Vehicle (V2V) communication interface.

In order to overcome these drawbacks, other methods known in the art suggest altering the grid itself using compression techniques. An example is the quadtree-based approach utilized in G. Kraetzschmar, G. P. Gassull, and K. Uhl, "Probabilistic Quadtrees for Variable-Resolution Mapping of Large Environments, " in Proc. Of the 5th IFAC/EURON Symposium on Intelligent Autonomous Vehicles, Lisbon, Portugal, July 2004 for two-dimensional (2D) grids.

Another known approach is to encode the information contained in the grid in a parametric form, which further reduces the required storage. Only function-specific information such as road boundaries, for example, suggested by M. Darms, M. Komar, and S. Lüke, "Map based Road Boundary Estimation ", in Proc. of the IEEE Intelligent Vehicles Symposium, San Diego, California, USA, June 2010, or moving objects, as suggested in T.-N. Nguyen, M.-M. Meinecke, M. Tornow, and B. Michaelis, "Optimized Grid-Based Environment Perception in Advanced Driver Assistance Systems ", in Proc. of the IEEE Intelligent Vehicles Symposium, Xi'an, Shaanxi, China, June 2009, pp. 425-430, have been extracted from grids and represented in a compact, parametric way.

To provide a function-independent, generic map representation, M. Schreier, V. Willert and J. Adamy, "From grid maps to Parametric Free Space maps - A highly compact, generic environment representation for ADAS", 2013 IEEE Intelligent Vehicles Symposium (IV), 2013, pp. 938-944, proposes a highly compact, generic representation of a driving environment, which is called a Parametric Free Space (PFS) map, wherein the free space represents the passable space for a vehicle. A PFS map is a continuous, bird's-eye view and two-dimensional (2D) representation of the local, static environment around a vehicle. PFS maps do not model the world by discrete grid cells but describe the free space via a flexible and closed curve in a parametric form. The proposed algorithm generates an occupancy grid based on sensor data and corresponding image analysis. The outer occupancy boundaries of the grid serve as a measurement vector for the recursive estimation of control points of a closed B-spline curve. The spline is tracked and updated over time according to new environment measurements. A fixed number of spline control points is suggested with the control points being equidistantly distributed along the spline. As a result, even complex static environments may be modeled relatively precisely while reducing the amount of required storage compared to a grid-based representation.

However, due to the fixed number of spline control points, which are equally distributed along the entire spline (e.g., in the S-domain of the spline), this approach leads to a number of control points not matching the local complexity of a boundary shape. In other words, too many control points may be used at positions where the shape of the boundary has very low curvature, and too few control points may be used where the shape of the boundary is locally complex. Hence, the resulting spline may not adequately match the boundary of the free space. Moreover, an unnecessarily large number of control points may be used.

In Yang et al.: "Control Point Adjustment for B-Spline Curve Approximation", Computer-Aided Design 36 (2004) 639-652, an approach for control point adjustment for a B-Spline Curve approximation is presented. This approach is based on a reference curve for local complexity determination in order to increase the accuracy of the approximation. However, for unknown/changing environments, as is the case for most vehicle assistance systems, no reference curve is available.

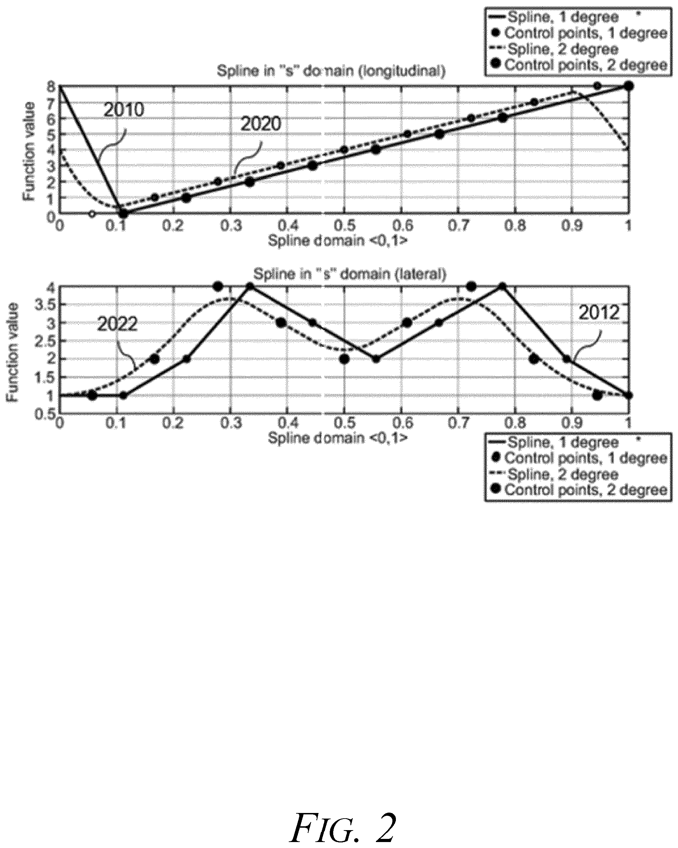

Figure 2 illustrates longitudinal and lateral 1D components of a parametric curve in the S-Domain. In particular, Figure 2 illustrates the longitudinal and lateral components of the parametric curves 1010, 1020 illustrated in Figure 1. For illustration purposes, an offset is applied between the splines of degree one and degree two. The first diagram of Figure 2 (top) depicts the longitudinal component 2010 of the first parametric curve 1010 of degree one, which is illustrated by a solid line, and the longitudinal component 2020 of the second parametric curve 1020 of degree two, which is illustrated by a dashed line. By contrast, the second diagram of Figure 2 (bottom) depicts the lateral component 2012 of the first parametric curve 1010 of degree one, which is illustrated by a solid line, and the lateral component 2022 of the second parametric curve 1020 of degree two, which is illustrated by a dashed line.

In general, a two-dimensional curve (e.g., the parametric curves 1010 and 1020) may be created from two one-dimensional curves (e.g., the parametric curves 2010 and 2012 or 2020 and 2020, respectively) by using s-values as a free parameter common for both components, wherein the first one-dimensional curve describes the longitudinal component, and the second one-dimensional curve describes the lateral component. Both one-dimensional curves may be of any, but the same, degree. Accordingly, the two-dimensional curve composed of the two one-dimensional curves must have the same degree as the corresponding one-dimensional curves. The corresponding control points are indicated by smaller and bigger black points, respectively. In both diagrams of Figure 2, the x-axis represents the parametric curve S-domain in a range from 0 to 1, whereas the y-axis represents the function value of the parametric curve component.

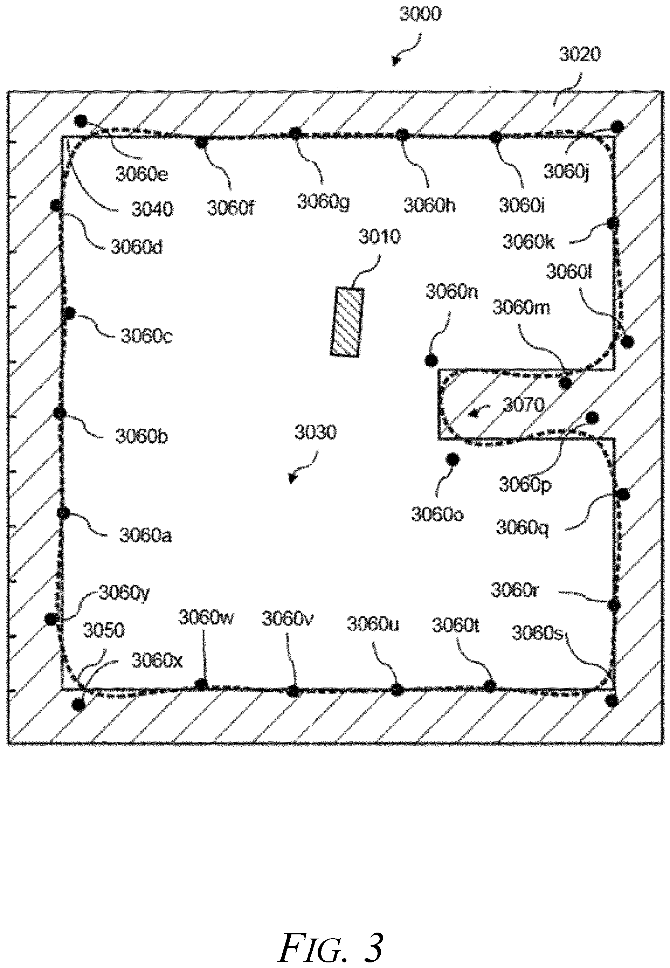

Figure 3 illustrates the approximation of a free space boundary based on 25 control points 3060. In particular, Figure 3 illustrates an environment 3000 that may surround a vehicle 3010. The environment 3000 in this example comprises an impassible region 3020 (e.g., a wall or other kinds of physical obstacles) forming a corresponding free space 3030 in which the vehicle 3010 may move around. In accordance with the shape of the impassable region 3020, the free space 3030 is described by a free space boundary 3040 (solid line).

Free space boundary 3040 is approximated by a parametric curve 3050 (dashed line), which is defined by 25 control points 3060a-y. The control points 3060a-y have been determined and set according to known methods, for example by the method according to M. Schreier, V. Willert and J. Adamy, "From grid maps to Parametric Free Space maps - A highly compact, generic environment representation for ADAS", 2013 IEEE Intelligent Vehicles Symposium (IV), 2013, pp. 938-944. Thus, the control points 3060a-y are equidistantly distributed along parametric curve 3050. Thus, adjacent control points 3060 (e.g., between control points 3060a and 3060b and control points 3060f and 3060g) have essentially the same distance from each other.

In general, the free space boundary 3040 and/or the parametric curve 3050 may be determined from sensor data of at least one sensor of the vehicle 3010. In another example, the free space boundary 3040 and/or the parametric curve 3050 may be determined based on another data structure as input (e.g., an occupancy grid) which was generated based on the sensor data. Alternatively, the free space boundary 3040 and/or the parametric curve 3050 may be received from a memory. The free space boundary 3040 and/or the parametric curve 3050 may be determined based on the sensor data in cases where the assistance system of the vehicle is turned on or when the vehicle's environment changes (e.g., when the vehicle moves). In these cases, it may be necessary to determine the free space boundary 3040 before modifying (e.g., optimizing) the distribution of the plurality of control points 3060 of the parametric curve 3050. In cases where the parametric curve 3050 has already been determined and no (re-)determining is necessary (for the moment), the already determined parametric curve, which may be saved into the memory of the vehicle, may be received from the memory. This may be reasonable in situations where the environment 3000 of the vehicle 3010 does not change or when a parametric curve 3050 has been determined based on the current environment of the vehicle and saved into memory before being further optimized.

Generating the parametric curve 3050 based on sensor data of the vehicle 3010 may allow for a precise modeling of the environment 3000 (e.g., the physical environment surrounding the vehicle). Accordingly, the resulting parametric curve 3050 may achieve a high approximation quality of the actual free space boundary 3040.

The parametric curve 3050 may be fitted based on a parametric curve configuration including a parametric curve degree and/or the plurality of control points (e.g., the number of control points initially selected for spanning the parametric curve). In this way, the parametric curve 3050 may be flexibly adjusted (e.g., the parametric curve's shape) to requirements defined by the changing environment 3000 of the vehicle 3010. In general, a parametric curve 3050 may be any suitable parametric curve which is described by a plurality of control points 3060 such as a $n^{th}$ degree B-spline or non-uniform rational B-spline (NURBS).

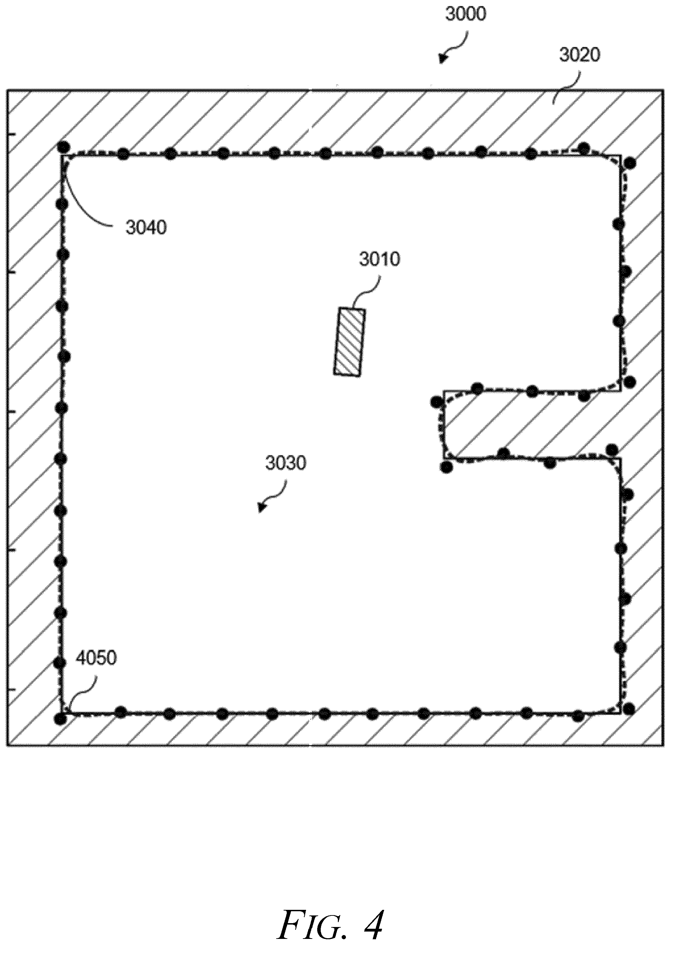

Figure 4 illustrates the approximation of a free space boundary based on 50 control points according to known methods. To improve approximation quality, known methods, for example the method according to M. Schreier, V. Willert and J. Adamy, "From grid maps to Parametric Free Space maps - A highly compact, generic environment representation for ADAS", 2013 IEEE Intelligent Vehicles Symposium (IV), 2013, pp. 938-944, simply increase the number of equidistantly distributed control points, as illustrated in Figure 4. Here, the number of control points (indicated by the black circles) has been increased to 50. As can be seen, compared to parametric curve 3050 of Figure 3, parametric curve 4050 fitted to the 50 control points much better approximates the free space boundary 3040. In other words, the shape of parametric curve 4050 comes much closer to the shape of free space boundary 3040 and thus provides an improved approximation quality.

However, the approach of simply increasing the number of control points has at least two drawbacks. First, increasing the number of control points increases the amount of memory for storing the control points and thus for storing the parametric curve 4050. Hence, if vehicles 3010 communicate such a parametric curve among each other (e.g., by a V2V communication interface), a higher communication bandwidth is required. In addition, processing a parametric curve based on an increased number of control points becomes more complex, slowing down the corresponding process. In general, one can see that using a fixed (i.e., hard coded) number of control points may either result in having too many control points, specifically in situations where the environment may be sufficiently approximated with less control points or may result in having too few control points in situations where the environment may not be sufficiently approximated with the fixed number of control points. In addition, having too many unnecessary control points in a section of the parametric curve may result in oscillatory behavior of the parametric curve (e.g., overshooting or high dynamics) which may decrease the approximation quality.

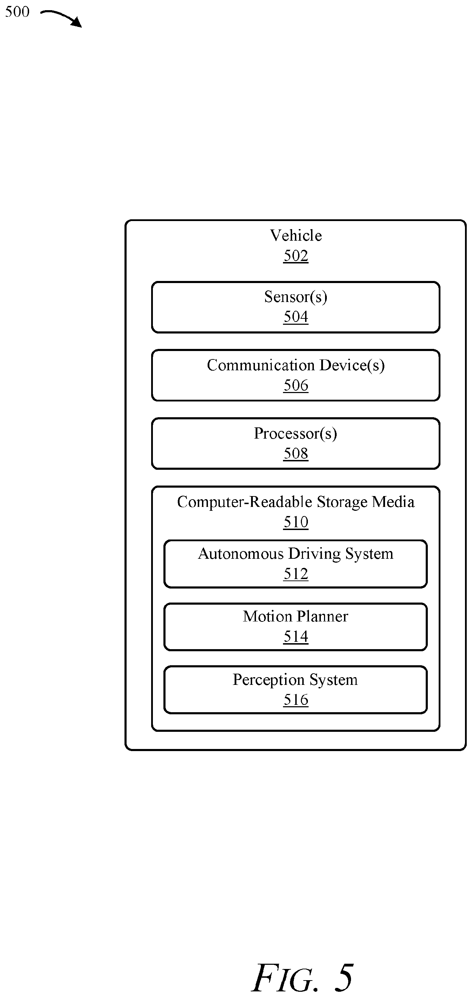

Figure 5 illustrates an example configuration 500 of a vehicle 502 that may implement the techniques described herein for associating measurement points to spline points in determinations of a free space boundary in a vehicle assistance system. The configuration 500 is for vehicle 502 equipped with an autonomous driving system 512. Also included in vehicle 502 are a motion planner 514 and a perception system 516. The configuration 500 may be divided into several layers, where each upper layer uses information provided by lower layers.

Vehicle 502 includes one or more sensors 504, one or more communication devices 506, one or more processors 508, and computer-readable storage media (CRM) 510. CRM 510 stores instructions associated with the autonomous driving system 512, the motion planner 514, and the perception system 516.

The sensors 504 are part of the bottom layer of configuration 500. The sensors 504 may be mounted to, or integrated within, any portion of vehicle 502 to provide an instrumented field of view. Sensors 504 produce raw information about vehicle 502 and the surrounding environment. As used herein, the sensors 504 may include camera systems, radar systems, lidar systems, or ultrasonic systems to detect and track objects in the environment surrounding vehicle 502 and detect a free space boundary for the drivable area surrounding vehicle 502. Radar systems may provide information regarding the range, radial velocity, and azimuth angle of nearby objects. Lidar systems and ultrasonic systems may provide a map of reflecting objects and indicate range information associated with those objects. Camera systems may be used to provide range information or to determine object classes associated with nearby objects.

Sensors 504 may provide sensor data regarding objects, including tracking data and free space boundaries. The data can, for example, indicate a relative position (e.g., range and lateral positioning), heading, or speed relative to vehicle 502 for the objects, including stationary objects that make up a free space boundary. In some cases, vehicle 502 includes multiple types of sensors 504, such as a radar system and a camera, which provide a larger instrument field-of-view or improved detection of objects.

The perception system 516 may include a vehicle state estimator and an environment perception system. The vehicle state estimation layer utilizes raw data from the sensors 504 to obtain accurate information about vehicle 502, including its position, speed, orientation (e.g., yaw), or yaw rate. The environment perception layer also uses data from sensors 504 to provide information about the surrounding environment, both the dynamic world (e.g., moving cars and pedestrians) and the stationary world (e.g., guardrails). The topmost layers include the autonomous driving system 512 which provides features and functions that support daily driving (e.g., lane-keeping assistance), and the motion planner 514 which is responsible for finding a safe path from point A to point B without colliding with objects.

The communication devices 506 include any radio or transceiver configured to send or receive signals for a vehicle. The communication devices 506 may include telecommunication radios, satellite transceivers, and the like.

The processors 508 (e.g., an energy processing unit or an electronic control unit) may be a microprocessor or a system-on-chip. The processors 508 execute instructions stored in CRM 510. For example, processors 508 may process sensor data from the sensors 504 and determine characteristics (e.g., relative positioning, range, and predicted tracks) of the free space boundary or other objects in the surrounding environment. The processor 508 may then control the operation of the autonomous driving system 512, the motion planner 514, or the perception system 516 to navigate the environment and avoid potential collisions or unsafe driving. For example, processors 508 may control, based on data from sensors 504, the motion planner 514 to determine a navigation path for the vehicle 502 to avoid objects and remains within the free space.

The vehicle state estimation (VSE) module of the perception system 516 is responsible for providing information about vehicle 502, including position, velocity vector, heading, sideslip, acceleration, yaw, and yaw rate. The VSE module may use dead reckoning to calculate the current position and heading of vehicle 502 based on previously determined position, speed, and direction. The VSE module may also use inertial measurement units (IMUs) (e.g., gyroscopes, magnetometers, accelerometers) to provide more precise positioning information. The VSE module may also use a Global Navigation Satellite System (GNSS) to determine the absolute position of vehicle 502. Many VSE modules incorporate data from one or more dead reckoning systems, GNSS, lidar systems, radar systems, and cameras to improve their accuracy.

The environment perception module of the perception system 516 is responsible for providing information about the surrounding environment, which may include a dynamically changing environment, partially occluded objects, or bad weather conditions. The surrounding environment may be divided into two complementary categories: dynamic environment and stationary environment. Stationary world estimators generally provide information about the boundaries of the space within which vehicle 502 may maneuver. The stationary environment is often represented using grid maps (e.g., occupancy grid maps) that use cells to hold information about part of the surrounding environment.

The motion planner 514 is responsible for generating a collision-free trajectory from a starting position to a destination position. The motion planner 514 may include a mission planner, behavior planner, and local planner.

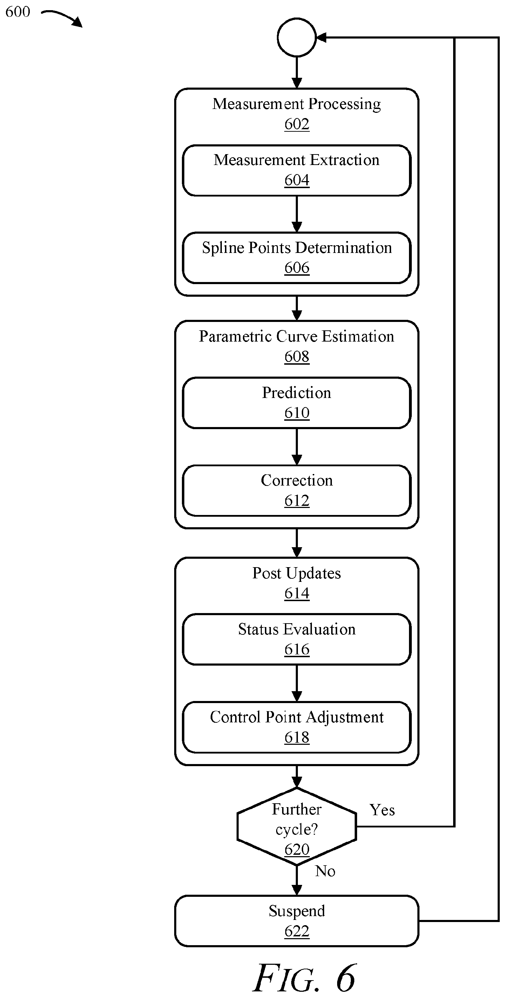

Figure 6 illustrates an overview of techniques associated with determining free space boundaries according to aspects of the present invention. In particular, Figure 6 illustrates an overview of algorithm 600 according to aspects of the present invention for associating measurement points to spline points in determinations of a free space boundary in a vehicle assistance system. The algorithm 600 provides techniques to preserve or improve the approximation quality of a parametric curve while at the same time reducing (when the approximation quality is preserved), maintaining (if the approximation quality is improved), or increasing (when too few control points are used to approximate a complex shape or to overcome a local minimum) the number of control points. Algorithm 600 determines the free space boundary of the stationary world using a closed 2D B-spline as a mathematical model. In particular, algorithm 600 provides a means to reduce the runtime associated with generating the free space boundary representation by efficiently associating spline points along the B-spline to corresponding measurement points.

In step 602, called "measurement processing", raw measurement data (e.g., sensor data from at least one sensor 504 of vehicle 502) is obtained and (pre-)processed so it can be used for the subsequent step 608. The measurement processing of step 602 includes measurement extraction 604 and spline point determination 606. In measurement extraction 604, measurement points are extracted from the raw measurement data, which may be retrieved by using the sensor(s) 504 of vehicle 502 to sample the free space boundary of the environment. The measurement data may be provided as an output from occupancy grid processing.

In spline point determination 606, an association between each measurement point and spline point (e.g., a point on the parametric curve) may be determined. This information may be used by a Kalman filter in the subsequent step 608 to estimate the parametric curve.

In step 608, called "parametric curve estimation", a parametric curve is obtained. In cases where there is no existing parametric curve which may otherwise be obtained from memory or be retrieved from another vehicle (e.g., by a V2V communication interface), a new parametric curve may be created/predicted in step 610 ("prediction") by an estimator (e.g., a Kalman filter - prediction step). Predicting the parametric curve may further be based on a vehicle movement compensation (e.g., the movement of vehicle 502 may introduce some uncertainties regarding the positions). After step 610 (e.g., after a parametric curve is obtained either by receiving an already existing one or by creating a new one), the parametric curve may be corrected in step 612 ("correction") based on the processed raw measurement data (e.g., a Kalman filter - correction step). In particular, in step 612 ("correction"), the control points are updated based, for example, on the newly received measurement points and their corresponding spline points.

In step 614, called "post updates", the parametric curve is updated (e.g., a plurality of control points of the parametric curve is modified). In step 616, called "status evaluation", states of the plurality of control points of the parametric curve are evaluated. A spline point is a point that lies on the parametric curve which approximates the free space boundary of an environment. More specifically, in step 616, spline points corresponding to the measurement points are identified which are then used to evaluate and update states of the control points of parts or portions of the parametric curve, which may be affected by new measurement points.

In step 618, called "control point adjustment", control point parameters (e.g., a shape complexity of the parametric curve section affected by the control point) are evaluated in order to reduce or increase the number of control points or adapting their distribution while maintaining or improving the approximation quality of the corresponding parametric curve with respect to a free space boundary or potentially reducing memory consumption.

Afterward, it is determined in step 620 whether a further cycle is required, which may depend on different criteria iterations (e.g., for reducing the number of control points and/or improving the approximation quality or adapting the parametric curve to a changed physical environment). If it is determined that a further cycle is required, algorithm 600 again executes the "measurement processing" according to step 602. If it is determined that no further cycle is required, algorithm 600 moves on to step 622, called "suspend".

In step 620, if vehicle 502 is moving, new measurements by means of the sensors 504 of vehicle 502 may be conducted constantly due to a changing environment. Hence, new measurements will be received that require an update of the spline. Therefore, when it is determined that the vehicle is moving, it may be decided to move to step 602 and start a further cycle of algorithm 600.

In step 622, called "suspend", algorithm 600 may remain paused, for example when the vehicle's engine or the vehicle assistance system is turned off. However, when the vehicle's engine or the vehicle assistance system is turned on again, the algorithm may restart execution by moving to step 602. This may also be the case when vehicle 502 has stopped moving and no further measurements are conducted.

In step 622, if algorithm 600 has reached this step, it may suspend execution. However, execution may be resumed if, for example, the engine of vehicle 502 or the corresponding vehicle assistance system executing the algorithm 600 is turned on again. In this case, algorithm 600 may move to step 602 to start a further cycle.

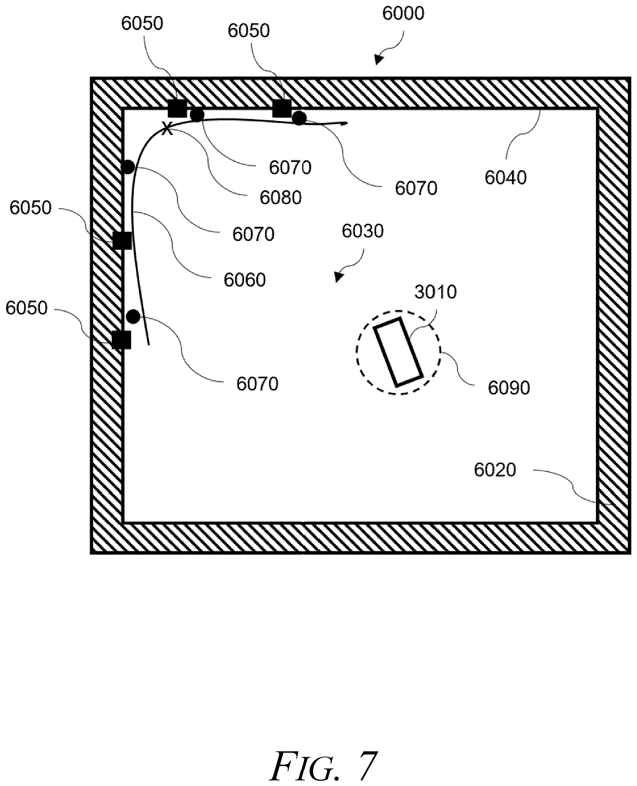

Figure 7 illustrates the environment surrounding a vehicle according to aspects of the present invention. Parametric curve estimation (step 608 of FIG. 6) is further described in reference to Figure 7, which illustrates an environment of 6000 that may surround vehicle 3010. Environment 6000 in this example includes an impassible region 6020 (e.g., a wall) in square shape and thus forms a free space 6030 which is also square shaped and in which the vehicle 3010 may move around. The free space 6030 is represented by a square-shaped free space boundary 6040.

A parametric curve 6060 (only partially shown here) and/or its corresponding control points 6070 may be retrieved from a memory. This could be the case if vehicle 3010 has already passed environment 6000 at a previous point in time and may have stored the corresponding parametric curve 6060 in memory for further usage. In addition, it is also possible that vehicle 3010 has retrieved parametric curve 6060 and/or the corresponding control points 6070 from another vehicle that previously passed environment 6000, e.g., by means of a V2V communication interface.

However, in the prediction step (step 610 of Figure 6), the generation of a parametric curve 6060 may also begin from scratch. In this case, the free space boundary 6040 may be determined by measurement points 6050 located on free space boundary 6040 and indicated by black squares, which may be obtained by sensors of vehicle 3010, like ranging or odometry sensors. In the example of Figure 7, for simplicity, only four measurement points 6050 are illustrated. However, to adequately define the shape of the free space boundary 6040, more than four measurement points 6050 may be required. The measurement points 6050 may be mapped onto a cartesian coordinate system according to environment 6000. An initial parametric curve 6090 (indicated by the dashed circle) surrounding vehicle 3010, preferably having a circular shape, may be used as a starting point. Then, according to the measurement points 6070, the shape of parametric curve 6060 may be extended to approximate the shape of free space boundary 6040. In other words, the control points 6070 to which parametric curve 6060 is fitted, are set accordingly. Independent of whether parametric curve 6060 has been retrieved from memory or has been generated from scratch, the parametric curve 6060 is corrected in the correction step (step 612 of Figure 6) based on the processed measurement data. During the operation of vehicle 3010, the measurement points 6050 (indicated by the black squares) may be updated. For example, new measurement points 6050 may be obtained from sensors of the vehicle and added to the free space boundary 6040, or measurement points 6050 may be dynamically removed due to movement of the vehicle 3010. Hence, measurement points 6050 may be updated over time, both when the environment 6000 dynamically changes due to movement of the vehicle 3010 and when the environment 6000 remains constant due to non-movement of the vehicle 3010.

At the end of parametric curve estimation (step 608 of Figure 6), parametric curve 6060 essentially corresponds to a parametric curve 3050, 4050 as described with respect to Figures 3 and 4, respectively, and thus comprises a relatively large amount of control points, wherein the distance between adjacent control points

**EP 4 459 570 B1**

6070 is essentially the same. Then, algorithm 600 moves on to post updates (step 614 of Figure 6).

As can be seen in Figure 3, the parametric curve 3050 does not correspond exactly to the free space boundary 3040 and thus only inaccurately approximates the shape of the free space boundary 3040. For example, in the upper left corner, the part of parametric curve 3050, which extends between the control points 3060d and 3060f, recognizably deviates from the rectangular corner of the free space boundary 3040. The parametric curve 3050 deviates even more from the shape of free space boundary 3040 when the complexity of the shape of free space boundary 3040 increases. This can be seen on the right side of Figure 3 where free space boundary 3040 has an inward indentation 3070. In this area, the part of parametric curve 3050, which extends between control points 3060l and 3060q, significantly deviates from the corresponding part of the shape of free space boundary 3040.

To improve approximation quality, known methods, for example, the method according to M. Schreier, V Willert and J. Adamy, "From grid maps to Parametric Free Space maps - A highly compact, generic environment representation for ADAS", 2013 IEEE Intelligent Vehicles Symposium (IV), 2013, pp. 938-944, simply increase the number of equidistantly distributed control points, as illustrated in Figure 4. Here, the number of control points (indicated by the black circles) has been increased to 50. As can be seen, compared to parametric curve 3050 of Figure 3, parametric curve 4050 fitted to the 50 control points much better approximates free space boundary 3040. In other words, the shape of parametric curve 4050 comes much closer to the shape of free space boundary 3040 and thus provides an improved approximation quality.

However, simply increasing the number of control points has at least two drawbacks. First of all, increasing the number of control points increases the amount of memory for storing the control points and thus for storing the parametric curve 4050. Hence, if vehicles 3010 communicate a parametric curve among each other (e.g., by a V2V communication interface), higher communication bandwidth is required. In addition, processing a parametric curve based on an increased number of control points becomes more complex, slowing down the corresponding process. In general, one can see that using a fixed (i.e., hard coded) number may either result in having too many control points, specifically in situations where the environment may be sufficiently approximated with fewer control points, or may result in having too few control points in situations where the environment may not be sufficiently approximated with the fixed number of control points. In addition, having too many unnecessary control points in a section of the parametric curve may result in oscillatory behavior of the parametric curve (e.g., overshooting or high dynamics) which may decrease the approximation quality.

A single measurement is represented by a measurement point 6050 that may be mapped onto a cartesian coordinate system. The measurement points 6050 may be approximated by parametric curve 6060. Parametric curve 6060 may comprise footprints or spline points, wherein one spline point 6080 is visually indicated in Figure 7, which is indicated by an X. The spline point 6080 is a point that lies on parametric curve 6060 that approximates the free pace boundary 6040. The spline points corresponding to measurement points 6050 are identified. Then, a corresponding control point 6070 may be updated if a new measurement point 6050 is found in a control point's support interval corresponding to the spline point 6080.

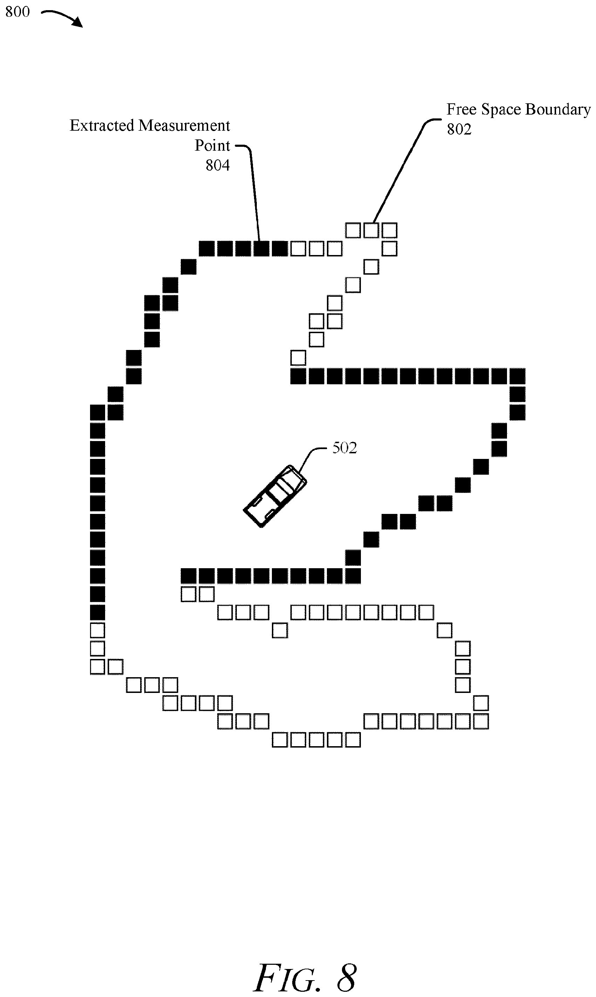

Figure 8 illustrates an example method to obtain extracted measurement points 804 along a free space boundary 802. As described earlier, vehicle 502 includes sensors 504. The white-fill cells represent portions of the free space boundary 802 that are not within the instrumental field-of-view of the sensors 504. The solid-black cells (e.g., those visible to sensors 504 of vehicle 502) represent the extracted measurement points 804 along the free space boundary 802. In another example method, the extracted measurement points 804 represent each point along the free space boundary and not just those within the instrumental field-of-view of the sensors 504.

In step 604 ("measurement extraction"), a set of measurement points that form a closed boundary of the free space are obtained. The set of measurement points may require sorting. Sorting may be performed by looking for any boundary point and then moving through all points, similarly to boundary tracing, to assign an index value to each processed point. Based on the index value, the extracted measurement points 804 are sorted. The sorted set still forms a closed boundary (e.g., the free space boundary 802) that does not have a starting or ending point. The "starting" point (e.g., the first point in the set) is arbitrarily chosen. The number of measurements provided by occupancy grid processing may be significant, with many potential measurements or pixels carrying redundant information. Such measurements can be discarded from further processing using different down selection methods (e.g., ray casting, only visible measurements, uniform down selection, line down selection, and direction down selection) without affecting the quality of approximating the free space boundary 802.

Figure 8 illustrates the only visible measurements down selection method that uses an infinite number of rays from the point of view of vehicle 502 (e.g., specifically, the center of vehicle 502) in all directions. Each ray provides information about the distance to an obstacle forming the free space boundary 802. Once a ray hits a boundary point on the grid, it is recognized as an extracted measurement point 804. As a result of the only visible measurements down selection method, all visible parts of the free space boundary 802 are identified as the extracted measurement points 804. In other implementations, other extraction methods may be used to obtain the measurement points 804 making up the free space boundary 802.

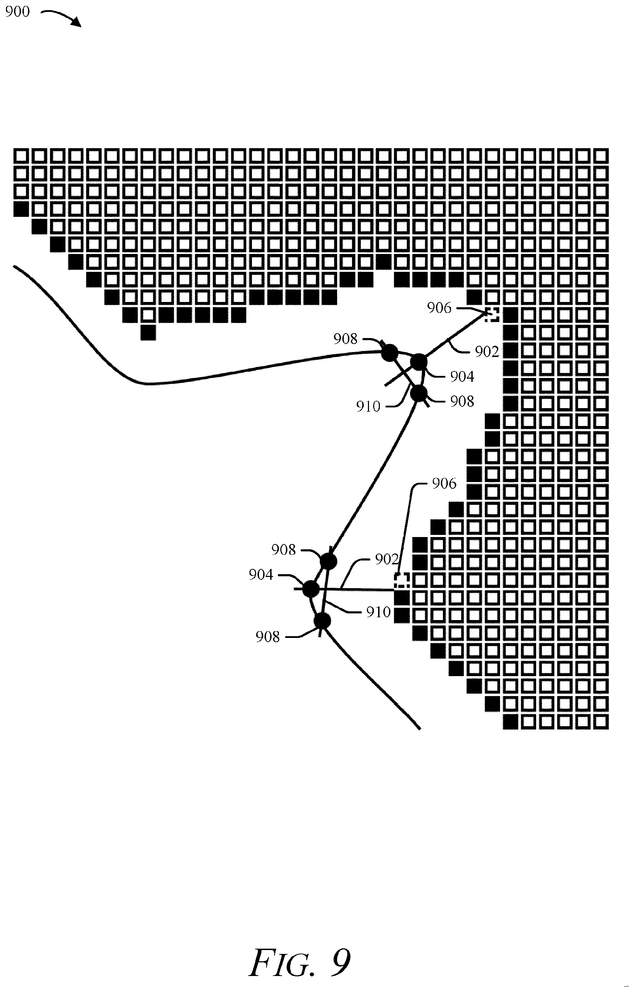

Figure 9 illustrates the disclosed techniques to associate extracted measurement points with corresponding spline points. In particular, Figure 9 illustrates a technique to perform the spline point determination of step 606 of Figure 6. This disclosed technique focuses on finding a measurement point that corresponds to each spline sample, which facilitates the measurement update later in algorithm 600. This association focuses on the calculation of the s value of the corresponding spline point in the s-domain for each measurement point. Several algorithms may be used to achieve this goal.

In generating parametric curves representing the free space boundary, each extracted measurement point is generally associated with a corresponding spline point along the parametric curve to facilitate measurement updates as the host vehicle navigates its environment. Existing approaches focus on finding the corresponding spline point to each measurement point. The PFS approach assumes that the measurement points are equally distributed and correspond to equally distributed spline points. Other approaches find a spline point for each measurement point based on the spline point that is closest in terms of the Euclidean distance.

In particular, the PFS approach assumes that all measurement points are equally distributed in the s-domain. Because a set of sorted measurement points is assumed to be exactly the same. This assumption also implies a similar starting measurement point (associated with the first spline point $s_1$) position between cycles. In each cycle, the new starting point is determined based on the starting point from the previous cycle by compensating for the movement of vehicle 502. The assumption of equally distributed measurement points is incorrect, however, because the distance between two neighboring pixels can be 1 [unit] (e.g., horizontally, laterally, or perpendicularly) or $\sqrt{2}$ [unit] (e.g., slant). In addition, the PFS assumption results in a semi-uniform distribution of control points along the spline (in the s-domain). Also, a starting point may disappear between cycles resulting in a new starting point being far from the previous one.

Other approaches focus on finding a spline point for each measurement point that is the closest in terms of the Euclidean distance. In particular, these approaches try to identify an argument s for which the following function is minimized:

$$ f(s) = \sqrt{(r_x(s) - z_x)^2 + (r_y(s) - z_y)^2}, $$

where $r_x(s)$ represents the longitudinal component of the spline point determined by its s value, $r_y(s)$ represents the lateral component of the spline point determined by its s value, $z_x$ represents the longitudinal component of the measurement point, and $z_y$ represents the lateral component of the measurement point.

These known association methods focus on finding the corresponding spline point or spline sample to each measurement point. In contrast, the disclosed technique (e.g., called the "perpendicular line" technique) illustrated in Figure 9 does the opposite. In particular, the perpendicular line technique focuses on finding a measurement point for each spline sample. It starts with the creation of a set of spline samples. The spline samples, for example, may be equally distributed in the S-domain or equally distributed along the parametric curve. In other implementations, the spline samples may not be equally distributed in the S-domain or along the parametric curve. Then, for each spline sample, a perpendicular line is created. The perpendicular line is created by using neighboring spline samples. In particular, a neighbor line is formed between the two neighboring spline samples (e.g., on either side of the spline point of interest) and then the perpendicular line is formed perpendicular to the neighbor line. The perpendicular line passes through the spline point of interest. The creation of the perpendicular line with the neighbor line is illustrated in Figure 9. Once the perpendicular line is created, algorithm 600 identifies the measurement point(s) that are closest to the perpendicular line and then selects the measurement point (from this subset) that is closest.

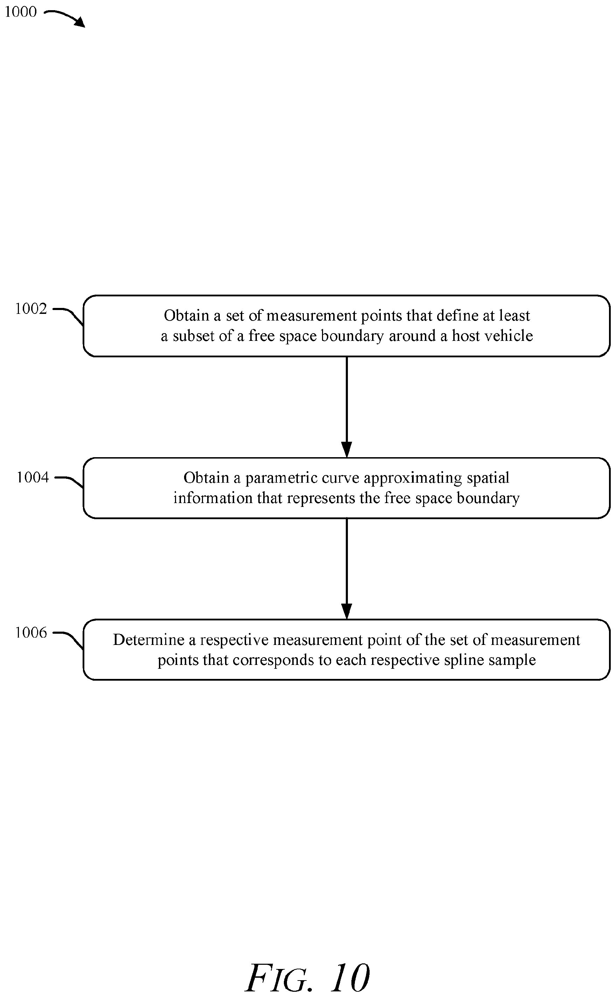

FIG. 10 illustrates an exemplified method 1000 for associating measurement points to spline points in determining a free space boundary in a vehicle assistance system. Method 1000 is shown as sets of operations (or acts) performed, but not necessarily limited to the order or combinations in which the operations are shown herein. Further, any of one or more of the operations may be repeated, combined, or reorganized to provide other methods. In portions of the following discussion, reference may be made to entities detailed in FIGs. 1 through 9, reference to which is made for example only. The techniques are not limited to performance by one entity or multiple entities.

At operation 1002, a set of measurement points defining a subset of the a space boundary around a host vehicle. For example, the perception system 516 of the vehicle 502 obtains a set of measurement points based on sensor data from the sensors 504.

At operation 1004, a parametric curve approximating spatial information representing the free space boundary is then obtained. For example, the perception system 516 obtains the parametric curve. The parametric curve 904 is defined by multiple control points (e.g., control points 6070) and includes a set of spline samples or spline points. The parametric curve may be obtained by the perception system 516 determining it based on sensor data from the sensors 504 of the vehicle 502 or received from a memory of the vehicle 502. The spline samples or spline sampling points may be equally distributed in the S-domain or equally distributed along the parametric curve.

At operation 1006, for each respective spline sample of the set of spline samples, a respective measurement point of the set of measurement points that corresponds to the respective spline sample is determined. For example, the perception system 516 iterates through each spline sample and determines a corresponding measurement point. This association is performed by generating a perpendicular line 902 for each spline sample 904 of the set of spline samples, with the perpendicular line 902 passing through the respective spline sample and being used to determine the respective measurement point 906 of the set of measurement points that corresponds to the respective spline sample 904. The perpendicular line 902 is generated by identifying neighboring spline points or spline samples 908 immediately before and after the respective spline sample 904 within the set of spline samples and defining a neighbor line 910 that passes through the neighboring spline samples 908. The perpendicular line 902 is perpendicular to this neighbor line 910 and passes through the respective spline sample 904. Measurement points that are close to the perpendicular line are then identified. And the associated or corresponding measurement point 906 is determined as the measurement point that is closest to or nearest the perpendicular line (e.g., based on a Euclidean distance or offset).

The perception system 516 may use the association between the measurement points and the spline samples to perform a measurement update as part of the parametric curve correction in step 612. Measurement update of the spline or parametric curve is a final step of a filter and is used to refine the spline parameters.

The perception system 516 may also use the association between the measurement points and the spline samples to perform control point adjustments. In particular, associations of the spline samples to the corresponding measurement points are used to determine an approximation error indicator that is estimated on the basis of the distance between the respective spline samples and the corresponding measurement points that lie within a limited supporting interval of a control point. A control point is added to the parametric curve in response to the approximation error indicator having a value larger than an additional threshold. Associations of the spline samples to the corresponding measurement points may also be used for spline approximation and status determinations of the control points.

In addition, the motion planner 514 may determine an operating instruction (e.g., displaying the parametric curve on a display of the vehicle 502, conducting vehicle path planning, triggering a warning for a driver of the vehicle 502, or affecting control of the vehicle 502 during a parking process) for the vehicle 502 based on the parametric curve affecting a function of a vehicle assistance system.

The techniques according to the present invention may be implemented in terms of a computer program that may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a non-transitory computer-readable storage medium, or a computer system.

In some embodiments, a non-transitory computer-readable storage medium may be configured so that it stores program instructions and/or data, where the program instructions, if executed by a computer system, cause the computer system to perform a method, e.g., any of the techniques described herein, or, any combination of the techniques described herein, or, any subset of any of the techniques described herein, or, any combination of such subsets.

In some embodiments, a computing device may be configured to include a processor (or a set of processors) and a memory medium, where the memory medium stores program instructions and the processor is configured to read and execute the program instructions from the memory medium, where the program instructions are executable to implement any of the various techniques described herein (or, any combination of the techniques described herein, or, any subset of any of the techniques described herein, or, any combination of such subsets). The device may be realized in various forms.

## Claims

1. A computer-implemented method for associating measurement points (906) of a free space boundary around a host vehicle to spline points (904) of a parametric curve representing the free space boundary, the method comprising:

    obtaining (1002) a set of measurement points that define at least a subset of the free space boundary;
    obtaining (1004) the parametric curve that approximates spatial information representing the free space boundary, the parametric curve including a set of spline points;
    for each respective spline point (904) of the set of spline points, determining (1006) a respective measurement point (906) of the set of measurement points that corresponds to the respective spline point (904);
    generating a perpendicular line (902) for each spline point (904) of the set of spline points, the perpendicular line (902) passing through the respective spline point (904), wherein the perpendicular line (902) is used to determine the respective measurement point (906) of the set of measurement points that corresponds to the respective spline point (904); and
    determining an operating instruction for the host vehicle based on the parametric curve affecting a function of a vehicle assistance system of the host vehicle.

2. The method of claim 1, wherein the set of measurement points are obtained from sensor data of one or more sensors of the host vehicle.

3. The method of claim 2, wherein obtaining (1004) the parametric curve comprises:

determining the parametric curve based on the sensor data of the one or more sensors; or receiving the parametric curve from a memory that is operably connected to a vehicle assistance system of the host vehicle.

4. The method of any one of the previous claims, wherein the set of spline points are equally distanced along the parametric curve or in an S-domain.

5. The method of claim 1, wherein the method further comprises generating the perpendicular line (902) for the respective spline point (904) by:

identifying neighboring spline points (908) immediately before and after the respective spline point (904) within the set of spline points; defining a neighbor line that passes through the neighboring spline points (908); and identifying the perpendicular line (902) as perpendicular to the neighbor line and passing through the respective spline point (904).

6. The method of claim 1, wherein the method further comprises:
identifying first measurement points near the perpendicular line (902).

7. The method of claim 6, wherein the method further comprises:
from among the first measurement points, identifying the respective measurement point (906) as a measurement point (906) among the first measurement points that is nearest the perpendicular line (902).

8. The method of claim 7, wherein determining the nearest measurement point is based on a Euclidean distance between each measurement point (906) of the first measurement points and the perpendicular line (902).

9. The method of any one of the previous claims, wherein:

the parametric curve is defined by a plurality of control points; and
associations of the respective spline points (904) to the corresponding measurement points (906) is used for at least one of determining an approximation error indicator that is estimated on the basis of the distance between the respective spline points (904) and the corresponding measurements points that lie within a limited supporting interval of a control point, determining spline approximations, or determining a status or updated status of control points.

10. The method of claim 9, wherein a control point is added to the parametric curve in response to the approximation error indicator having a value larger than an addition threshold.

11. The method of any one of the previous claims, wherein the function comprises at least one of displaying the parametric curve on a display of the host vehicle, conducting a vehicle path planning, triggering a warning, or affecting control of the host vehicle during a parking process.

12. An apparatus comprising a vehicle assistance system configured to perform the method of any one of the previous claims.

13. A vehicle comprising an apparatus according to claim 12.

14. A non-transitory computer-readable storage medium comprising computer-executable instructions that, when executed by a computer system, cause the computer system to perform the method of any one of claims 1 through 11.

**Patentansprüche**

1. Durch einen Computer realisiertes Verfahren zum Zuordnen von Messpunkten (906) einer Freiraumgrenze um ein Host-Fahrzeug zu Spline-Punkten (904) einer parametrischen Kurve, die die Freiraumgrenze darstellt, wobei das Verfahren umfasst, dass:

ein Satz von Messpunkten, die zumindest eine Teilmenge der Freiraumgrenze definieren, erhalten wird (1002);
die parametrische Kurve, die eine die Freiraumgrenze darstellende räumliche Information annähert, erhalten wird (1004), wobei die parametrische Kurve einen Satz von Spline-Punkten umfasst;
für jeden jeweiligen Spline-Punkt (904) des Satzes von Spline-Punkten ein jeweiliger Messpunkt (906) des Satzes von Messpunkten, der dem jeweiligen Spline-Punkt (904) entspricht, ermittelt wird (1006);
für jeden Spline-Punkt (904) des Satzes von Spline-Punkten eine senkrechte Linie (902) erzeugt wird, wobei die senkrechte Linie (902) durch den jeweiligen Spline-Punkt (904) verläuft, wobei die senkrechte Linie (902) verwendet wird, um den jeweiligen Messpunkt (906) des Satzes von Messpunkten, der dem jeweiligen Spline-Punkt (904) entspricht, zu ermitteln; und

basierend auf der eine Funktion eines Fahrzeugassistenzsystems des Host-Fahrzeugs beeinflussenden parametrischen Kurve eine Betriebsanweisung für das Host-Fahrzeug ermittelt wird.

2. Verfahren nach Anspruch 1, wobei der Satz von Messpunkten aus Sensordaten eines oder mehrerer Sensoren des Host-Fahrzeugs erhalten wird.

3. Verfahren nach Anspruch 2, wobei das Erhalten (1004) der parametrischen Kurve umfasst, dass:

die parametrische Kurve basierend auf den Sensordaten des einen oder der mehreren Sensoren ermittelt wird; oder
die parametrische Kurve von einem Speicher empfangen wird, der funktional mit einem Fahrzeugassistenzsystem des Host-Fahrzeugs verbunden ist.

4. Verfahren nach einem der vorstehenden Ansprüche, wobei der Satz von Spline-Punkten entlang der parametrischen Kurve oder in einem S-Bereich gleichmäßig beabstandet ist.

5. Verfahren nach Anspruch 1, wobei das Verfahren ferner das Erzeugen der senkrechten Linie (902) für den jeweiligen Spline-Punkt (904) umfasst, indem:

benachbarte Spline-Punkte (908) unmittelbar vor und nach dem jeweiligen Spline-Punkt (904) innerhalb des Satzes von Spline-Punkten identifiziert werden;
eine Nachbarlinie, die durch die benachbarten Spline-Punkte (908) verläuft, definiert wird; und
die senkrechte Linie (902) als senkrecht zu der Nachbarlinie und durch den jeweiligen Spline-Punkt (904) verlaufend identifiziert wird.

6. Verfahren nach Anspruch 1, wobei das Verfahren ferner umfasst, dass:
erste Messpunkte in der Nähe der senkrechten Linie (902) identifiziert werden.

7. Verfahren nach Anspruch 6, wobei das Verfahren ferner umfasst, dass:
unter den ersten Messpunkten der jeweilige Messpunkt (906) als ein Messpunkt (906) unter den ersten Messpunkten, der der senkrechten Linie (902) am nächsten ist, identifiziert wird.

8. Verfahren nach Anspruch 7, wobei das Ermitteln des nächsten Messpunkts auf einem euklidischen Abstand zwischen jedem Messpunkt (906) der ersten Messpunkte und der senkrechten Linie (902) basiert.

9. Verfahren nach einem der vorstehenden Ansprüche, wobei:

die parametrische Kurve durch eine Vielzahl von Kontrollpunkten definiert wird; und
Zuordnungen der jeweiligen Spline-Punkte (904) zu den entsprechenden Messpunkten (906) verwendet werden, um einen Näherungsfehlerindikator zu ermitteln, der basierend auf dem Abstand zwischen den jeweiligen Spline-Punkten (904) und den entsprechenden Messpunkten, die innerhalb eines begrenzten Unterstützungsintervalls eines Kontrollpunkts liegen, geschätzt wird und/oder Spline-Näherungen zu ermitteln und/oder einen Status oder einen aktualisierten Status von Kontrollpunkten zu ermitteln.

10. Verfahren nach Anspruch 9, wobei in Ansprechen darauf, dass der Näherungsfehlerindikator einen Wert aufweist, der größer als ein Zusatzschwellenwert ist, ein Kontrollpunkt zu der parametrischen Kurve hinzugefügt wird.

11. Verfahren nach einem der vorstehenden Ansprüche, wobei die Funktion umfasst, dass die parametrische Kurve an einer Anzeige des Host-Fahrzeugs angezeigt wird und/oder eine Fahrzeugpfadplanung ausgeführt wird und/oder eine Warnung ausgelöst wird und/oder die Steuerung des Host-Fahrzeugs während eines Parkvorgangs beeinflusst wird.

12. Vorrichtung, umfassend ein Fahrzeugassistenzsystem, das ausgestaltet ist, um das Verfahren nach einem der vorstehenden Ansprüche durchzuführen.

13. Fahrzeug, umfassend eine Vorrichtung nach Anspruch 12.

14. Nicht-transitorisches durch einen Computer lesbares Speichermedium, umfassend durch einen Computer ausführbare Anweisungen, die bei einer Ausführung durch ein Computersystem bewirken, dass das Computersystem das Verfahren nach einem der Ansprüche 1 bis 11 durchführt.

**Revendications**

1. Procédé mis en œuvre par ordinateur pour associer des points de mesurage (906) d'une limite d'espace libre autour d'un véhicule hôte à des points de spline (904) d'une courbe paramétrique représentant la limite d'espace libre, le procédé comprenant les étapes consistant à :

obtenir (1002) un ensemble de points de mesurage qui définissent au moins un sous-ensemble de la limite d'espace libre ;

obtenir (1004) la courbe paramétrique qui se rapproche d'informations spatiales représentant la limite d'espace libre, la courbe paramétrique incluant un ensemble de points de spline ;

pour chaque points de spline respectif (904) de l'ensemble de points de spline, déterminer (1006) un point de mesurage respectif (906) de l'ensemble de points de mesurage qui correspond au point de spline respectif (904) ;

générer une ligne perpendiculaire (902) pour chaque point de spline (904) de l'ensemble de points de spline, la ligne perpendiculaire (902) passant par le point de spline respectif (904), la ligne perpendiculaire (902) étant utilisée pour déterminer le point de mesurage respectif (906) de l'ensemble de points de mesurage qui correspond au point de spline respectif (904) ; et

déterminer une instruction de fonctionnement pour le véhicule hôte sur la base de la courbe paramétrique concernant une fonction d'un système d'assistance de véhicule du véhicule hôte.

2. Procédé selon la revendication 1, dans lequel l'ensemble de points de mesurage sont obtenus à partir de données de capteurs de un ou plusieurs capteurs du véhicule hôte.

3. Procédé selon la revendication 2, dans lequel l'étape consistant à obtenir (1004) la courbe paramétrique comprend de :

déterminer la courbe paramétrique sur la base des données de capteurs desdits un ou plusieurs capteurs ; ou

recevoir la courbe paramétrique depuis une mémoire qui est connectée de manière fonctionnelle à un système d'assistance de véhicule du véhicule hôte.

4. Procédé selon l'une quelconque des revendications précédentes, dans lequel l'ensemble de points de spline sont à équidistance le long de la courbe paramétrique ou dans un domaine S.

5. Procédé selon la revendication 1, dans lequel le procédé comprend en outre l'étape consistant à générer la ligne perpendiculaire (902) pour le point de spline respectif (904) via les opérations consistant à :

identifier des points de spline voisins (908) immédiatement avant et après le point de spline respectif (904) à l'intérieur de l'ensemble de points de spline ;

définir une ligne voisine qui passe par les points de spline voisins (908) ; et

identifier la ligne perpendiculaire (902) comme perpendiculaire à la ligne voisine et passant par le point de spline respectif (904).

6. Procédé selon la revendication 1, dans lequel le procédé comprend en outre l'étape consistant à : identifier des premiers point de mesurage près de la ligne perpendiculaire (902).

7. Procédé selon la revendication 6, dans lequel le procédé comprend en outre l'étape consistant à : parmi les premiers points de mesurage, identifier le point de mesurage respectif (906) comme point de mesurage (906) parmi les premiers points de mesurage qui est le plus près de la ligne perpendiculaire (902).

8. Procédé selon la revendication 7, dans lequel l'étape consistant à déterminer le point de mesurage le plus près est basée sur une distance euclidienne entre chaque point de mesurage (906) des premiers points de mesurage et la ligne perpendiculaire (902).

9. Procédé selon l'une quelconque des revendications précédentes, dans lequel :

la courbe paramétrique est définie par une pluralité de points de contrôle ; et

une association des points de spline respectifs (904) aux points de mesurage correspondants (906) est utilisée pour l'une au moins d'une détermination d'un indicateur d'erreur d'approximation qui est estimé sur la base de la distance entre les points de spline respectifs (904) et les points de mesurage correspondants qui se trouvent à l'intérieur d'un intervalle de support limité d'un point de contrôle, d'une détermination d'approximations de spline, ou d'une détermination d'un état ou d'un état mis à jour de points de contrôle.

10. Procédé selon la revendication 9, dans lequel un point de contrôle est ajouté à la courbe paramétrique en réponse au fait que l'indicateur d'erreur d'approximation a une valeur supérieure à un seuil d'addition.

11. Procédé selon l'une quelconque des revendications précédentes, dans lequel la fonction comprend l'une au moins des fonctions suivantes : afficher la courbe paramétrique sur un affichage du véhicule hôte, effectuer une planification de trajet de véhicule, déclencher un avertissement, ou influer sur une commande du véhicule hôte pendant une opération de stationnement.

**12.** Appareil comprenant un système d'assistance de véhicule configuré pour effectuer le procédé selon l'une quelconque des revendications précédentes.

**13.** Véhicule comprenant un appareil selon la revendication 12.

**14.** Support de stockage non transitoire lisible par ordinateur comprenant des instructions exécutables par ordinateur qui, quand elles sont exécutées par un système d'ordinateur, amènent le système d'ordinateur à effectuer le procédé selon l'une quelconque des revendications 1 à 11.

*FIG. 1*

*FIG. 2*

*FIG. 3*

*FIG. 4*

500

**Vehicle**
502

Sensor(s)
504

Communication Device(s)
506

Processor(s)
508

Computer-Readable Storage Media
510

Autonomous Driving System
512

Motion Planner
514

Perception System
516

*FIG. 5*

600

```
     ┌──────────────────────────────────┐
     │   Measurement Processing         │
     │            602                   │
     │  ┌────────────────────────────┐  │
     │  │  Measurement Extraction    │  │
     │  │          604               │  │
     │  └────────────────────────────┘  │
     │              │                   │
     │              ▼                   │
     │  ┌────────────────────────────┐  │
     │  │ Spline Points Determination│  │
     │  │          606               │  │
     │  └────────────────────────────┘  │
     └──────────────────────────────────┘
                    │
                    ▼
     ┌──────────────────────────────────┐
     │   Parametric Curve Estimation    │
     │            608                   │
     │  ┌────────────────────────────┐  │
     │  │       Prediction           │  │
     │  │          610               │  │
     │  └────────────────────────────┘  │
     │              │                   │
     │              ▼                   │
     │  ┌────────────────────────────┐  │
     │  │       Correction           │  │
     │  │          612               │  │
     │  └────────────────────────────┘  │
     └──────────────────────────────────┘
                    │
                    ▼
     ┌──────────────────────────────────┐
     │        Post Updates              │
     │            614                   │
     │  ┌────────────────────────────┐  │
     │  │    Status Evaluation       │  │
     │  │          616               │  │
     │  └────────────────────────────┘  │
     │              │                   │
     │              ▼                   │
     │  ┌────────────────────────────┐  │
     │  │  Control Point Adjustment  │  │
     │  │          618               │  │
     │  └────────────────────────────┘  │
     └──────────────────────────────────┘
                    │
                    ▼
              ╱ Further ╲   Yes
             〈  cycle?   〉──────
              ╲  620    ╱
                    │ No
                    ▼
     ┌──────────────────────────────────┐
     │          Suspend                 │
     │            622                   │
     └──────────────────────────────────┘
```

*FIG. 6*

*FIG. 7*

800

Extracted Measurement
Point
804

Free Space Boundary
802

502

*FIG. 8*

900

*FIG. 9*

1000

1002 — Obtain a set of measurement points that define at least a subset of a free space boundary around a host vehicle

1004 — Obtain a parametric curve approximating spatial information that represents the free space boundary

1006 — Determine a respective measurement point of the set of measurement points that corresponds to each respective spline sample

*FIG. 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- From grid maps to Parametric Free Space maps - A highly compact, generic environment representation for. **SCHREIER MATTHIAS et al.** 2013 IEEE INTELLIGENT VEHICLES SYMPOSIUM (IV). IEEE, 23 June 2013, 938-944
- Control point adjustment for B-spline curve approximation. **YANG H et al.** COMPUTER-AIDED DESIGN. ELSEVIER PUBLISHERS, 01 June 2004, vol. 36, 639-652
- Industrial geometry: recent advances and applications in CAD. **POTTMANN H et al.** COMPUTER-AIDED DESIGN. ELSEVIER PUBLISHERS BV, 01 June 2005, vol. 37, 751-766
- **S. STEYER** ; **G. TANZMEISTER** ; **D. WOLLHERR**. Grid-Based Environment Estimation Using Evidential Mapping and Particle Tracking. *IEEE Transactions on Intelligent Vehicles*, September 2018, vol. 3 (3), 384-396
- **G. KRAETZSCHMAR** ; **G. P. GASSULL** ; **K. UHL**. Probabilistic Quadtrees for Variable-Resolution Mapping of Large Environments,. *Proc. Of the 5th IFAC/EURON Symposium on Intelligent Autonomous Vehicles*, July 2004

- **M. DARMS** ; **M. KOMAR,** ; **S. LÜKE**. Map based Road Boundary Estimation. *Proc. of the IEEE Intelligent Vehicles Symposium*, June 2010
- **T.-N. NGUYEN** ; **M.-M. MEINECKE** ; **M. TORNOW** ; **B. MICHAELIS**. Optimized Grid-Based Environment Perception in Advanced Driver Assistance Systems. *Proc. of the IEEE Intelligent Vehicles Symposium*, June 2009, 425-430
- **M. SCHREIER** ; **V. WILLERT** ; **J. ADAMY**. From grid maps to Parametric Free Space maps - A highly compact, generic environment representation for ADAS. *2013 IEEE Intelligent Vehicles Symposium (IV)*, 2013, 938-944
- **YANG et al.** Control Point Adjustment for B-Spline Curve Approximation. *Computer-Aided Design*, 2004, vol. 36, 639-652
- **M. SCHREIER** ; **V WILLERT** ; **J. ADAMY**. From grid maps to Parametric Free Space maps - A highly compact, generic environment representation for ADAS. *2013 IEEE Intelligent Vehicles Symposium (IV)*, 2013, 938-944